# EUROPÄISCHE PATENTSCHRIFT

(11) **EP 1 104 515 B1**
(45) Veröffentlichungstag und Bekanntmachung des Hinweises auf die Patenterteilung: **09.07.2003**
(21) Anmeldenummer: 99944398.9
(22) Anmeldetag: 14.08.1999
(51) Int. Cl.: F16H 37/04, F16H 3/091

(54) **GETRIEBE MIT NICHT-KOAXIALEM ABTRIEB**
TRANSMISSION WITH NON-COAXIAL OUTPUT
BOITE DE VITESSES A SORTIE NON COAXIALE

(30) Priorität: 20.08.1998 DE 19837776
(43) Veröffentlichungstag der Anmeldung: 06.06.2001
(73) Patentinhaber: ZF FRIEDRICHSHAFEN Aktiengesellschaft, 88038 Friedrichshafen (DE)
(72) Erfinder: HOYER, Herbert, D-88085 Langenargen (DE)
(86) Internationale Anmeldenummer: EP9905977
(87) Internationale Veröffentlichungsnummer: WO00011373

(56) Entgegenhaltungen:
- WO-A-86/02608
- WO-A-92/01173
- DE-A- 3 143 819
- GB-A- 1 162 333
- US-A- 4 308 763

## Beschreibung

Die Erfindung betrifft ein Getriebe mit einer Hauptwelle und einer Vorgelegewelle nach dem Oberbegriff des Anspruchs 1.

Aus dem Stand der Technik sind Getriebe mit einer Eingangswelle, einer Hauptwelle, einer Vorgelegewelle und einer Abtriebswelle bekannt, bei denen die Eingangswelle, die Hauptwelle und die Abtriebswelle auf einer gemeinsamen Rotationsachse angeordnet sind. Getriebe dieser Art können einteilige Eingangs- und Hauptwelle oder einteilige Hauptund Abtriebswelle aufweisen. Beispielhaft ist in der DE 195 38 192 ein gattungsgemäßes Getriebe dargestellt.

Aufgrund der gewünschten Übersetzungsverhältnisse dieser Getriebe werden die Zähnezahlen auf den Zahnrädern der Wellen bestimmt. Dies bedingt bestimmte Durchmesserverhältnisse der Zahnräder der parallelen Wellen zueinander und damit auch den räumlichen Abstand der parallelen Wellen untereinander. So sind üblicherweise das Zahnradpaar, das aus dem ersten Zahnrad auf der Eingangswelle und dem von der Antriebsseite her gesehenen ersten Zahnrad auf der Vorgelegewelle besteht, so ausgestaltet, daß ein im Durchmesser sehr kleines Zahnrad auf der Eingangswelle einem im Durchmesser sehr großen Zahnrad auf der Vorgelegewelle zugeordnet ist. Diese Zahnradpaarung ermöglicht die Übertragung eines großen Drehmomentes auf einem niedrigen Drehzahlniveau. Ein großer räumlicher Abstand verursacht aber eine große Getriebegehäusegröße, die zu Schwierigkeiten im Einbauraum des Fahrzeugherstellers führen kann.

Der Erfindung liegt die Aufgabe zugrunde, den Bauraumbedarf für ein Getriebe zu verringern und zu einer kleineren Getriebegröße zu führen.

Die Aufgabe wird gelöst durch ein Getriebe mit den Merkmalen des Anspruchs 1. Ausgestaltungen sind Gegenstand von Unteransprüchen.

Gemäß der Erfindung wird vorgeschlagen, auf der Abtriebswelle des Getriebes ein Zahnrad drehfest anzuordnen, das von einem mit der Vorgelegewelle drehfest verbundenen Zahnrad angetrieben wird, wobei dieses Zahnradpaar eine Konstante bildet. Dabei ist die Eingangswelle des Getriebes drehfest mit der Hauptwelle verbunden. Die Rotationsachse der Eingangswelle und die Rotationsachse der Hauptwelle sind gleich und die Rotationsachse der Hauptwelle und die Rotationsachse der Abtriebswelle bilden nicht die gleiche Achse. Der Abstand der Rotationsachsen von Hauptwelle und Abtriebswelle zueinander wird bestimmt vom Übersetzungsverhältnis des Zahnradpaares der Konstante.

In einer vorteilhaften Ausgestaltung ist das Zahnradpaar der Konstante in einem getrennten Getriebegehäuse untergebracht, um eine Auswechslung dieses Zahnradpaares zu ermöglichen.

In einer weiteren vorteilhaften Ausgestaltung ist eine Nebenabtriebswelle für den Antrieb eines hydrodynamischen Retarders vorgesehen, die unmittelbar von der Hauptwelle oder der Vorgelegewelle antreibbar ist zur Erzielung einer hohen Drehzahl des Retarders ohne Zwischenschaltung einer Hochtreiberstufe dient.

Eine vorteilhafte Ausgestaltung zeigt auf der Abtriebswelle eine Schalteinrichtung für ein Splitgetriebe zur Unterteilung der Gangstufen in Halbstufensprünge.

In einer vorteilhaften Ausgestaltung wird anschließend an das Zahnradpaar der Konstante ein Bereichsgruppengetriebe in Form eines Planetengetriebes vorgesehen zur Erweiterung der Gesamtspreizung des Getriebes.

Durch die Verlagerung der Anordnung einer Konstanten des Getriebes an das abtriebsseitige Ende des Getriebes und die Nichtkoaxialität der Rotationsachsen von Hauptwelle und Abtriebswelle wird eine Verringerung der Durchmesser der großen Zahnräder des Getriebes erreicht. Dadurch lassen sich mit verringerten Durchmessern das Gewicht der Zahnräder reduzieren und die Achsabstände der parallelen Wellen verkleinern, was zu einer geringeren Baugröße des Getriebes führt. Eine verringerte Getriebebaugröße bedeutet an dieser Stelle vorteilhafterweise geringeres Gewicht und mehr Einbauraum im Fahrzeug. Gleichzeitig führt verringerter Materialaufwand und Bearbeitungsaufwand an kleineren Zahnrädern und Gehäusen zu geringeren Kosten. Kleinere zu bewegende und beim Schalten zu synchronisierende Massen der Zahnräder führen zu einem Schaltkraftniveau, das deutlich unter dem Niveau bei bekannten, konventionellen Getrieben liegt. Ebenfalls können die Synchronisiereinrichtungen kleiner ausfallen, weil die zu synchronisierenden Massen geringer sind.
Durch die kleineren Zahnräder am antriebsseitigen Ende der Vorgelegewelle, bei kleinem Achsabstand zwischen Antriebswelle bzw. Hauptwelle und der Vorgelegewelle, liegen die Drehzahlen der Vorgelegewelle auf einem höheren Niveau. Dadurch wird im größten Teil des Getriebes ein verringertes Drehmomentniveau erreicht, auf das die Bauteile des Getriebes ausgelegt werden müssen. Erst in der Abtriebskonstante entsteht ein höheres Drehmoment bei einem vergrößerten Achsabstand zwischen Abtriebswelle und Vorgelegewelle. Das Getriebeeingangsdrehmoment läßt sich mit der erfinderischen Anordnung für Getriebeausführungen mit Berggang- und Schnellgangversionen in gleicher Größe auslegen.

Aufgrund einer einteiligen Ausführung von Eingangswelle und Hauptwelle kann die Zapfenlagerung der Hauptwelle in der Eingangswelle nach Stand der Technik entfallen. Das am Getriebeende angeordnete Zahnradpaar kann so ausgestaltet werden, daß es als eine separate Baugruppe dem sonstigen Getriebegehäuse nachgeordnet wird und so eine modulare Bauweise von Getrieben mit unterschiedlichen Zahnradpaarungen an der Abtriebskonstante ermöglicht.

Die Erfindung wird anhand von Zeichnungen näher beschrieben.
Es zeigen:
- Fig. 1: ein Getriebe nach dem Stand der Technik;
- Fig. 2: eine schematische Anordnung eines Getriebes nach der Erfindung und
- Fig. 3: eine Anordnung nach Fig. 2 mit Splitgetriebe.

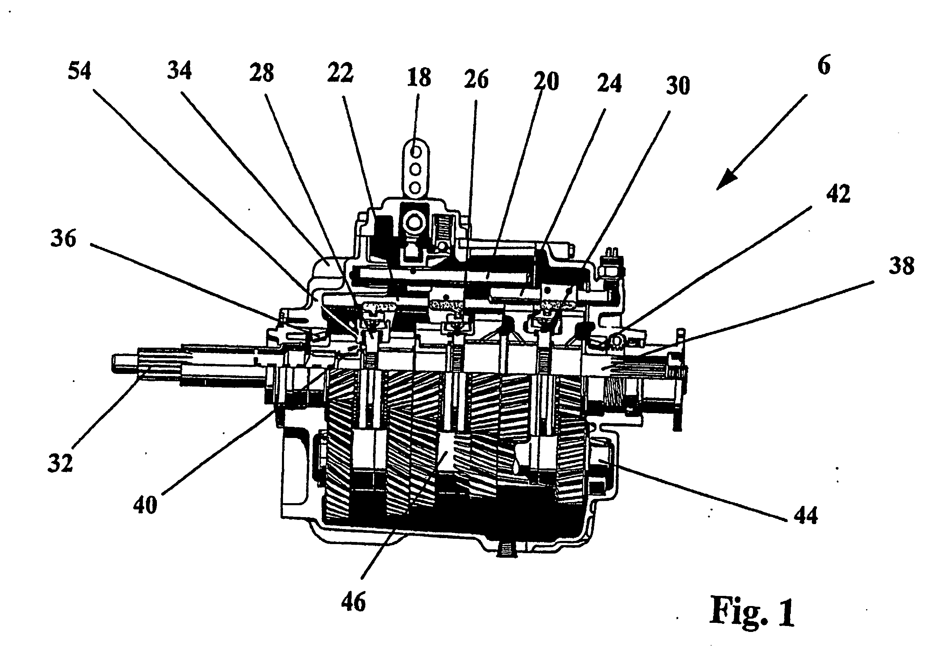

Die Fig. 1 zeigt in einer vergrößerten Darstellung ein Getriebe 6 nach dem Stand der Technik mit hier beispielsweise fünf Vorwärtsgängen und einem Rückwärtsgang. Mit einem Schalthebel 18 wird auf die drei Schaltstangen 20, 22 und 24 zugegriffen, die über Schaltgabeln die Synchronisiereinrichtungen 26, 28 und 30 in die gewünschten Schaltstellungen bewegen. So schaltet die Synchronisiereinrichtung 30 den Rückwärtsgang und die erste Getriebeübersetzung. Die Synchronisiereinrichtung 26 schaltet die Gangstufen zwei und drei, während die Synchronisiereinrichtung 28 zur Schaltung der Gangstufen vier und fünf verwendet wird. Die Getriebeeingangswelle 32 ist im Getriebegehäuse 34 durch eine Lagerung, beispielsweise ein hier gezeigtes Lager 36, gelagert. Die Hauptwelle 38 ist durch ein Lager 40 in der Getriebeeingangswelle 32 und durch eine Lagerung, beispielsweise ein hier gezeigtes Lager 42, in dem Gehäuse 34 gelagert. Die Umkehr der Drehrichtung für den Rückwärtsgang wird durch ein Zwischenrad 44 erzielt, dessen Verzahnung in die Verzahnung des Rückwärtsgangrades auf der Hauptwelle 38 und die Verzahnung der Vorgelegewelle 46 eingreift. Die weiteren Verzahnungen der Zahnräder auf der Hauptwelle 38 für die Vorwärtsgangübersetzung greifen ebenfalls in entsprechende Verzahnungen in der Vorgelegewelle 46 ein. Weiterhin ist an der Getriebeeingangswelle 32 eine Verzahnung zur Aufnahme eines Kupplungskörpers 54 vorgesehen.

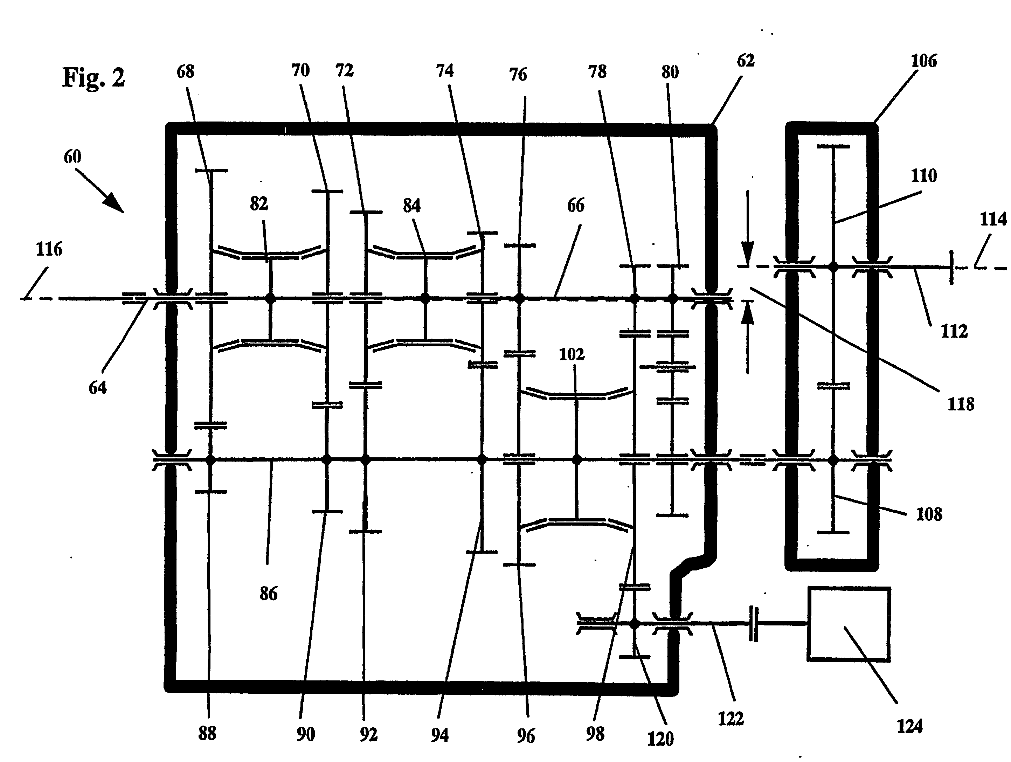

Die Fig. 2 zeigt eine schematische Darstellung des Getriebeaufbaus nach der Erfindung. Ein Getriebe 60 weist ein Getriebegehäuse 62 auf, in das eine Eingangswelle 64 hineinragt. Die Eingangswelle 64 ist mit der Hauptwelle 66 des Getriebes 60 einstückig ausgebildet. Auf der Hauptwelle 66 sind sieben Zahnräder 68, 70, 72, 74, 76, 78, 80 angeordnet, von denen die Zahnräder 68, 70, 72, 74 lose auf der Hauptwelle 66 rotieren können, während die Zahnräder 76, 78, 80 ständig drehfest mit der Hauptwelle 66 verbunden sind. Zwischen den Zahnrädern 68 und 70 ist eine Synchronisiereinrichtung 82 vorgesehen, mit der wahlweise das Zahnrad 68 oder das Zahnrad 70 drehfest mit der Hauptwelle 66 verbindbar ist. Zwischen den Zahnrädern 72 und 74 ist eine Synchronisiereinrichtung 84 vorgesehen, mit der wahlweise das Zahnrad 72 oder das Zahnrad 74 drehfest mit der Hauptwelle 66 verbindbar ist.

Auf der Vorgelegewelle 86 sind ebenfalls sieben Zahnräder 88, 90, 92, 94, 96, 98, 100 vorgesehen, von denen die Zahnräder 88, 90, 92, 94 ständig drehfest mit der Vorgelegewelle 86 verbunden sind. Zwischen den Zahnrädern 96 und 98 ist eine Synchronisiereinrichtung 102 vorgesehen, mit der wahlweise das Zahnrad 96 oder das Zahnrad 98 drehfest mit der Vorgelegewelle 86 verbindbar ist. Das Zahnrad 100 kämmt zur Drehrichtungsumkehr für den Rückwärtsgang mit einem Zwischenrad 104, das wiederum mit dem Zahnrad 80 auf der Hauptwelle 66 kämmt. Das Zahnrad 98 kämmt mit einem Zahnrad 120 auf einer Nebenabtriebswelle 122, von der ein Retarder 124 angetrieben wird. Durch den großen Durchmesser von Zahnrad 98 wird die Nebenabtriebswelle 122 mit einer hohen Drehzahl angetrieben.

Anschließend an das Getriebegehäuse 62 ist in der hier gezeigten Darstellung ein weiteres Gehäuse 106 vorgesehen. In dem Gehäuse 106 ist ein Zahnraadpaar aus zwei Zahnrädern 108 und 110 angeordnet, wobei das Zahnrad 108 drehfest mit der Vorgelegewelle 86 verbunden ist. Das Zahnrad 110 ist ständig drehfest mit der Abtriebswelle 112 verbunden. Die Zahnräder 108 und 110 können aber auch innerhalb eines entsprechend gestalteten Getriebegehäuses 62 angeordnet werden.
Zahnrad 110 und Abtriebswelle 112 drehen sich um eine gedachte Rotationsachse 114. Die Hauptwelle 66 und die darauf angeordneten Zahnräder sowie die Eingangswelle 64 drehen sich um eine Rotationsachse 116. Die beiden Rotationsachsen 114 und 116 liegen nicht koaxial zueinander, sondern sind durch einen Achsabstand 118 voneinander getrennt.

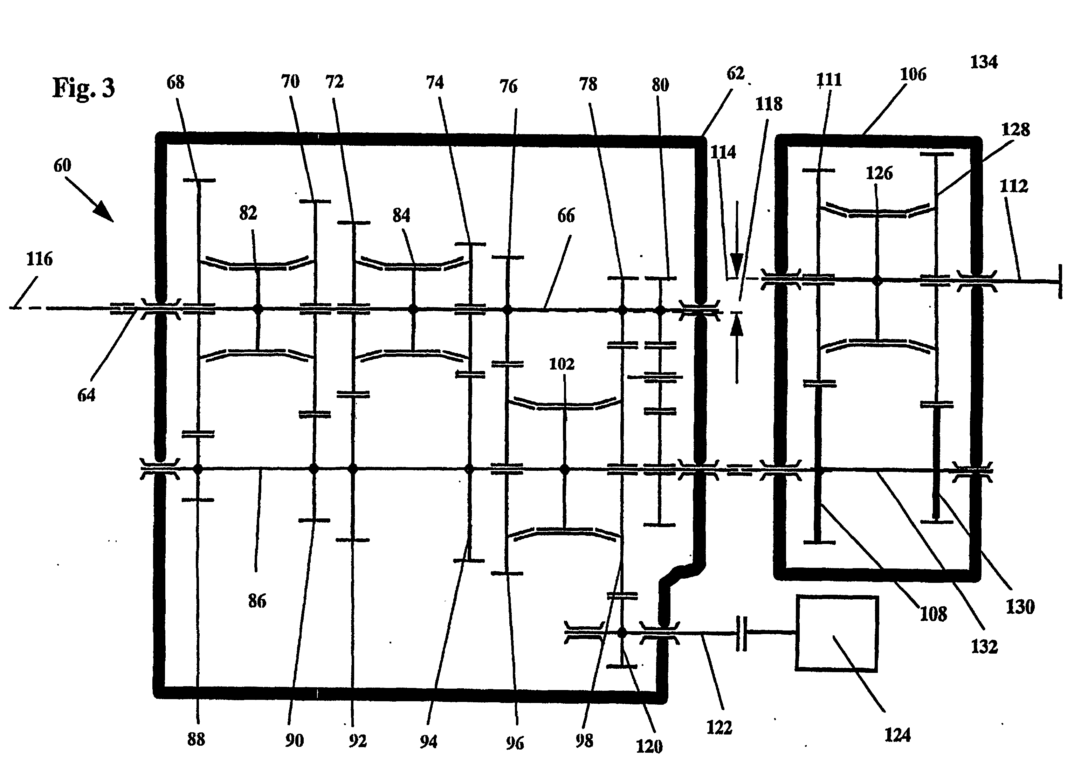

Die Fig. 3 zeigt eine Anordnung, die gegenüber der Fig. 2 durch ein Splitgetriebe 134 im Gehäuse 106 erweitert ist zur Bildung einer zweiten Konstante. Hier ist auf der Abtriebswelle 112 eine Synchronisiereinrichtung 126 vorgesehen, mit der wahlweise das Zahnrad 111 oder das Zahnrad 128 drehfest mit der Abtriebswelle verbindbar ist. Das Zahnrad 108 ist gemeinsam mit einem Zahnrad 130 drehfest auf einer Welle 132 angeordnet.

### Bezugszeichen

- 6: Getriebe
- 18: Schalthebel
- 20: Schaltstange
- 22: Schaltstange
- 24: Schaltstange
- 26: Synchronisiereinrichtung
- 28: Synchronisiereinrichtung
- 30: Synchronisiereinrichtung
- 32: Getriebeeingangswelle
- 34: Getriebegehäuse
- 36: Lager
- 38: Hauptwelle
- 40: Lager
- 42: Lager
- 44: Zwischenrad
- 46: Vorgelegewelle
- 54: Kupplungskörper
- 60: Getriebe
- 62: Getriebegehäuse
- 64: Eingangswelle
- 66: Hauptwelle
- 68: Zahnrad
- 70: Zahnrad
- 72: Zahnrad
- 74: Zahnrad
- 76: Zahnrad
- 78: Zahnrad
- 80: Zahnrad
- 82: Synchronisiereinrichtung
- 84: Synchronisiereinrichtung
- 86: Vorgelegewelle
- 88: Zahnrad
- 90: Zahnrad
- 92: Zahnrad
- 94: Zahnrad
- 96: Zahnrad
- 98: Zahnrad
- 100: Zahnrad
- 102: Synchronisiereinrichtung
- 104: Zwischenrad
- 106: Gehäuse
- 108: Zahnrad
- 110: Zahnrad
- 111: Zahnrad
- 112: Abtriebswelle
- 114: Rotationsachse
- 116: Rotationsachse
- 118: Achsabstand
- 120: Zahnrad
- 122: Nebenabtriebswelle
- 124: Retarder
- 126: Synchronisiereinrichtung
- 128: Zahnrad
- 130: Zahnrad
- 132: Welle
- 134: Splitgetriebe

## Patentansprüche

1. Fahrzeuggetriebe (6, 60) mit einer Eingangswelle (32, 64), einer Hauptwelle (38, 66), einer Vorgelegewelle (46, 86) und einer Abtriebswelle (112), die um Rotationsachsen (114, 116) drehbar angeordnet sind und mit einer Vielzahl von losen (68, 70, 72, 74, 96, 98, 111, 128) und fest (76, 78, 80, 88, 90, 92, 94, 108, 110, 130) angeordneten Zahnrädern auf den Wellen (32, 38, 46, 60, 64, 66, 112, 132), **dadurch gekennzeichnet, daß** auf der Abtriebswelle (112) ein Zahnrad (110, 111, 128) drehfest verbindbar angeordnet ist, das von einem mit der Vorgelegewelle (86) drehfest verbundenen Zahnrad (108, 130) angetrieben wird, wobei dieses Zahnradpaar (108-110, 108-111, 130-128) eine Konstante bildet, die Eingangswelle (64) des Getriebes (60) drehfest mit der Hauptwelle (66) verbunden ist, wobei die Rotationsachse (116) der Eingangswelle (64) und die Rotationsachse (116) der Hauptwelle (66) die gleiche Achse bilden und daß die Rotationsachse (116) der Hauptwelle (66) und die Rotationsachse (114) der Abtriebswelle (112) nicht die gleiche Achse bilden und der Abstand (118) der Rotationsachsen (114, 116) von Hauptwelle (66) und Abtriebswelle (112) zueinander bestimmt wird vom Übersetzungsverhältnis des Zahnradpaares (108-110, 108-111, 130-128) der Konstante.

2. Fahrzeuggetriebe (6, 60) nach Anspruch 1, **dadurch gekennzeichnet, daß** das Zahnradpaar (108-110, 108-111, 130-128) der Konstante in einem getrennten Getriebegehäuse (106) untergebracht ist, um eine Auswechslung des Zahnradpaares (108-110, 108-111, 130-128) zu ermöglichen.

3. Fahrzeuggetriebe (6, 60) nach Anspruch 1 oder 2, **dadurch gekennzeichnet, daß** eine Nebenabtriebswelle (122) für den Antrieb eines hydrodynamischen Retarders (124) vorgesehen ist, die unmittelbar von der Hauptwelle (66) oder der Vorgelegewelle (86) antreibbar ist zur Erzielung einer hohen Drehzahl des Retarders (124) ohne Zwischenschaltung einer Hochtreiberstufe.

4. Fahrzeuggetriebe (6, 60) nach einem der Ansprüche 1 bis 3, **dadurch gekennzeichnet, daß** auf der Abtriebswelle (112) eine Synchronisiereinrichtung (126) für ein Splitgetriebe (134) vorgesehen ist zur Unterteilung der Gangstufen in Halbstufensprünge.

5. Fahrzeuggetriebe (6, 60) nach einem der Ansprüche 1 bis 3, **dadurch gekennzeichnet ; daß** anschließend an das Zahnradpaar (108-110, 108-111, 130-128) der Konstante ein Bereichsgruppengetriebe in Form eines Planetengetriebes vorgesehen ist zur Erweiterung der Gesamtspreizung des Getriebes (60).

## Claims

1. Vehicle transmission (6, 60) with an input shaft (32, 64), a main shaft (38, 66), a countershaft (46, 86) and an output shaft (112), which swivel around rotation axes (114, 116) and feature a multitude of loose (68, 70, 72, 74, 96, 98, 111, 128) and fixed (76, 78, 80, 88, 90, 92, 94, 108, 110, 130) gears on the shafts (32, 38, 46, 60, 64, 66, 112, 132), **characterized in that** the output shaft (112) has a rotation-fixed engageable gear (110, 111, 128) arranged on it, which is driven by a gear (108, 130) that is nonrotationally connected to the countershaft (86), with this gear pair (108-110, 108-111, 130-128) representing a constant; that the input shaft (64) of the transmission (60) is nonrotationally linked to the main shaft (66), with the rotation axis (116) of the input shaft (64) and the rotation axis (116) of the main shaft (66) forming the same axis; and that the rotation axis (116) of the main shaft (66) and the rotation axis (114) of the output shaft (112) do not form the same axis; and that the distance (118) of the rotation axes (114, 116) of main shaft (66) and output shaft (112) relative to each other is determined by the transmission ratio of the gear pair (108-110, 108-111, 130-128) of the constant.

2. Vehicle transmission (6, 60) according to claim 1, **characterized in that** the gear pair (108-110, 108-111, 130-128) of the constant is housed in a separate transmission housing (106) to allow exchange of the gear pair (108-110, 108-111, 130-128).

3. Vehicle transmission (6, 60) according to claim 1 or 2, **characterized in that** an auxiliary drive shaft (122) is provided for the drive of a hydrodynamic retarder (124), which can be driven directly by the main shaft (66) or the countershaft (86), for a high speed of the retarder (124) to be achieved without interposed booster stage.

4. Vehicle transmission (6, 60) according to one of the claims 1 to 3, **characterized in that** the output shaft (112) has a synchronizing device (126) for a splitter unit (134) arranged on it, for the transmission steps to be subdivided into half steps.

5. Vehicle transmission (6, 60) according to one of the claims 1 to 3, **characterized in that** adjacent to the gear pair (108-110, 108-111, 130-128) of the constant, there is a range-change unit in the form of a planetary transmission, for overall spreading of the transmission (60) to be expanded.

## Revendications

1. Boîte de vitesses pour véhicules (6, 60) dotée d'un arbre d'entrée (32, 64), d'un arbre principal (38, 66), d'un arbre intermédiaire (46, 86) et d'un arbre de sortie (112) disposés de manière pivotante autour d'axes de rotation (114, 116), et pourvue d'une multitude de pignons fous (68, 70, 72, 74, 96, 98, 111, 128) et de pignons fixes (76, 78, 80, 88, 90, 92, 945, 108, 110, 130) disposés sur les arbres (32, 38, 46, 60, 64, 66, 112, 132) **caractérisée en ce que** sur l'arbre de sortie (112) est disposé un engrenage (110, 112, 128) qui peut être relié de façon solidaire en rotation, lequel est entraîné par un engrenage (108, 130) relié de façon solidaire en rotation à l'arbre intermédiaire (86), sachant que ce train d'engrenages (108-110, 108-111, 130-128) forme une constante, sachant que l'arbre d'entrée (64) de la boîte de vitesses (60) est relié de façon solidaire en rotation à l'arbre principal (66), sachant que l'axe de rotation (116) de l'arbre d'entrée (64) et l'axe de rotation (116) de l'arbre principal (66) forment un même axe, et **en ce que** l'axe de rotation (116) de l'arbre principal (66) et l'axe de rotation (114) de l'arbre de sortie (112) ne forment pas le même axe, et **en ce que** la distance (118) des axes de rotation (114, 116) de l'arbre principal (66) et de l'arbre de sortie (112) est déterminée par le rapport de démultiplication du train d'engrenages (108-110, 108-111, 130-128) de la constante.

2. Boîte de vitesses pour véhicules (6, 60) selon la revendication 1, **caractérisée en ce que** le train d'engrenages (108-110, 108-111, 130-128) de la constante est disposé dans un carter de boîte de vitesses séparé (106), afin de permettre le remplacement du train d'engrenages (108-110, 108-111, 130-128).

3. Boîte de vitesses pour véhicules (6, 60) selon une des revendications 1 ou 2, **caractérisée en ce que** est prévu un arbre de prise de mouvement (122) pour l'entraînement d'un ralentisseur hydrodynamique (124), l'arbre de prise de mouvement (122) pouvant être entraîné directement par l'arbre principal (66) ou par l'arbre intermédiaire (86), afin de pouvoir obtenir un régime élevé au niveau du ralentisseur (124) sans devoir interposer un surmultiplicateur.

4. Boîte de vitesses pour véhicules (6, 60) selon une des revendications 1 - 3, **caractérisée en ce que** sur l'arbre de sortie (112) est disposé un équipement de synchronisation (126) pour un doubleur de gamme (134) afin de pouvoir subdiviser les rapports en demi-vitesses.

5. Boîte de vitesses pour véhicules (6, 60) selon une des revendications 1 - 3, **caractérisée en ce que** en aval du train d'engrenages (108-110, 108-111, 130-128) de la constante est prévu un médiateur sous forme d'une boîte épicycloïdale pour étendre l'ouverture totale de la boîte de vitesses (60).
